(19) Europäisches Patentamt
European Patent Office
Office européen des brevets

(11) EP 0 963 391 B1

(12) # FASCICULE DE BREVET EUROPEEN

(45) Date de publication et mention de la délivrance du brevet:
**06.10.2004 Bulletin 2004/41**

(21) Numéro de dépôt: **98912576.0**

(22) Date de dépôt: **02.03.1998**

(51) Int Cl.[7]: **C08G 18/62**, C08G 18/70

(86) Numéro de dépôt international:
**PCT/FR1998/000404**

(87) Numéro de publication internationale:
**WO 1998/038231 (03.09.1998 Gazette 1998/35)**

(54) **REVETEMENT POUR EXTERIEUR, COMPOSITION UTILE POUR CES REVETEMENTS ET PROCEDE D'OBTENTION DE CES REVETEMENTS**

AUSSENBESCHICHTUNG, GEEIGNETE ZUSAMMENSETZUNG FÜR SOLCHE BESCHICHTUNGEN UND VERFAHREN ZUR HERSTELLUNG SOLCHER BESCHICHTUNGEN

EXTERIOR COATING, COMPOSITION USED FOR SUCH COATINGS AND METHOD FOR OBTAINING THE SAME

(84) Etats contractants désignés:
**AT BE CH DE DK ES FI FR GB GR IE IT LI LU MC NL PT SE**

(30) Priorité: **28.02.1997 FR 9702408**
**30.06.1997 FR 9708215**

(43) Date de publication de la demande:
**15.12.1999 Bulletin 1999/50**

(73) Titulaire: **Rodhia Chimie**
**92408 Courbevoie Cedex (FR)**

(72) Inventeurs:
- **FROUIN, Laurent**
  **F-94240 L'Hay-les-Roses (FR)**
- **JEANNETTE, Thierry**
  **F-92380 Garches (FR)**
- **NABAVI, Minou**
  **F-75014 Paris (FR)**
- **PRAT, Evelyne**
  **F-93500 Pantin (FR)**

(74) Mandataire: **Ricalens, François et al**
**Rhodia Services,**
**Direction de la Propriété Industrielle,**
**40, rue de la Haie-Coq**
**93306 Aubervilliers Cedex (FR)**

(56) Documents cités:
**EP-A- 0 367 120**
**EP-A- 0 663 413**
**EP-A- 0 680 983**
**EP-A- 0 739 961**
**WO-A-97/31960**
**DE-A- 4 007 637**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 963 391 B1**

## Description

La présente invention a pour objet un revêtement pour extérieur ou sol industriel, une composition utile pour de tels revêtements et procédé d'obtention de ces revêtements.

Elle concerne plus particulièrement l'association de certains polyols avec certaines mises en forme d'isocyanate.

Les revêtements décrits dans l'invention sont particulièrement intéressants pour application sur des support métallique mais il résolve un problème surtout pour les supports non métallique parmi lesquels on peut citer les supports végétaux tel le bois et principalement les supports minéraux, de porosité variable, de type béton, plâtre, pierre, support phosphomagnésien.

On peut ainsi obtenir des revêtements à perméabilité contrôlée (étanches à l'eau [imperméabilité aux liquides] tout en permettant au support de respirer [perméabilité aux gaz]) dont la profondeur de pénétration dans le support et la souplesse pourront être ajustés, en jouant en particulier sur la taille et la Tg du polyol ainsi que la nature du tensioactif utilisé.

Ces revêtements pourront être appliqués sans problème sur des supports humides.

Ces revêtements pourront être utilisés en intérieur ou en extérieur, sur parois horizontales ou verticales avec succès en particulier :

- ⇨ comme couche de finition des sols industriels (en général, support minéral ou bois) : on améliore la résistance à l'abrasion, et l'on diminue la perméabilité à l'eau, ce qui permet d'obtenir des sois durables, d'entretien facile ;
- ⇨ comme revêtement d'étanchéité : on peut réaliser par imprégnation un revêtement étanche souple qui peut être appliqué en extérieur à basse température en présence d'humidité, sans poser de problème de fissuration.

Par le terme "revêtement" on entend notamment :

1) *Les "résines" d'imprégnation*

Ces produits sont destinés à pénétrer et à remplir les pores, sur une profondeur variant de 0,1 à 3 mm et plus suivant la porosité du support, généralement de 0,5 à 3 mm.

Ils sont généralement appliqués par pulvérisation ou à la brosse afin d'aider à la pénétration dans le support. Leur fonction est de diminuer la porosité, de diminuer les salissures, faciliter le nettoyage, et d'améliorer la résistance à l'usure et de renforcer les propriétés mécaniques.

Les résines d'imprégnation connues de l'art sont à base d'époxydes, de polyuréthanes, de polyméthylméthacrylate, ou de polyester.

2) *Les peintures, revêtements (stricto sensu)*

Ce sont des films minces d'au moins environ $10^{-2}$ mm, généralement de 0,1 à 1 mm à base de résines synthétiques époxydiques, polyuréthanes, méthacrylates, utilisées seules ou combinées et qui contiennent en général des charges fines et des pigments.

Ils sont appliqués sur supports horizontaux ou verticaux, à la brosse, au rouleau, à la raclette ou bien par pulvérisation.

Dans le cas d'application sur support horizontal, on pourra obtenir par saupoudrage de charges sur une couche fraîche, des revêtements semi-épais.

Ces revêtements de sols sont destinés, tout comme les résines d'imprégnation, à diminuer la porosité du support, réduisant par là la formation de poussières, facilitant le nettoyage, améliorant la résistance à l'abrasion, la résistance aux agents chimiques agressifs : acides, bases, solvants, huiles ...

3) *Les chapes en résine synthétique (incluant les revêtements autolissants)*

Les sols autonivelants peuvent être constitués par des mélanges de résines et de charges appliqués sur des épaisseurs de 1 à 3 mm et talochés, qui confèrent au sol un aspect lisse (suppression de la macro rugosité) et/ou qui peut être rendu antidérapant par saupoudrage de charges (silice, corindon ...).

Les chapes en résine synthétique sont appliquées sur des épaisseurs plus importantes (4 mm à 1,5 cm).

Il faut obtenir un revêtement présentant de très bonnes caractéristiques mécaniques et chimiques et un bel aspect esthétique.

Il faut obtenir en particulier des résistances en compression et en flexion élevées ($R_{compression}$ : 60 à 120 MPA - $R_{flexion}$ : 28 à 45 MPa).

les chapes doivent être particulièrement résistantes à l'abrasion et indiquées dans le cas de trafic lourd et présenter également de bonnes résistances chimiques aux agressions.

Un des buts de la présente invention est de fournir les résines polyuréthanes qui permettent en particulier d'obtenir des revêtements souples, qui masquent les fissures existantes du support et qui permettent de résister aux fissurations induites par le support.

De telles compositions sont notamment utiles pour les vernis (au contraintes desquels elles se prêtent particulièrment bien) mais aussi à la peinture. plus génralement, elles peuvent être utiles pour toute application utilisant les propriétés de condensation des isocyanates.

Dans la suite de la présente description, on utilisera le terme de dispersion pour les polymères à fonctions hydroxyles et notamment les polyols cependant qu'on utilisera l'expression émulsions pour les isocyanates, bloqués ou non.

L'utilisation de solvants organiques est de plus en plus souvent critiquée par les autorités en charge de la sécurité du travail, car ces solvants, ou du moins certains d'entre eux, sont réputés toxiques ou chronotoxiques. C'est la raison pour laquelle on essaye de développer de plus en plus des techniques qui se substituent aux techniques en milieu solvant ou qui permettent d'en réduire la quantité pour pallier les inconvénients afférents aux solvants.

Une des solutions les plus souvent utilisées réside dans l'utilisation d'émulsions ou de dispersions dans l'eau.

Pour réaliser des films de peintures ou de vernis, on mélange deux dispersions, une émulsion contenant l'isocyanate qui peut être bloqué et une dispersion de polyol.

Le mélange des dispersions pouvant également contenir des pigments et des charges est alors déposé sur un support sous forme d'un film à l'aide des techniques classiques de mise en oeuvre des résines ou peintures industrielles. Lorsque la préparation contient des isocyanates bloqués, l'ensemble film plus support est cuit à une température suffisante pour assurer le déblocage des fonctions isocyanates et la condensation de celles-ci avec des groupements hydroxyles des particules de polyol. Toutefois de telles techniques sont quasiment impossibles à mener à bien à l'extérieur.

Dans la présente description, les caractéristiques de granulométrie font souvent référence à des notations-du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme

$$I = (d_{90}-d_{10})/d_{50}$$

Typiquement, les rapports des tailles moyennes, ou bien le $d_{50}$)lorsqu'il est déterminable, entre l'émulsion d'isocyanate et la dispersion de polyol sont compris entre 2 et 200. Ainsi les tailles moyennes des émulsions d'isocyanates fabriquées selon la technique décrite dans la demande de brevet français déposée le 31.03.1993 sous le n° 93 03795 et publiée sous le n° 2703358 le 07.10.94, ont des tailles moyennes comprises entre 0,1 et 10 micromètres et plus généralement entre 0,3 et 2 micromètres. Les dispersions de polyols utilisées en association avec ces émulsions ont des tailles moyennes mesurées par diffusion quasi élastique de la lumière comprises entre 20 et 200 nanomètres et plus généralement comprises entre 50 et 150 nanomètres.

Lorsque l'on mélange des dispersions de tailles différentes, ce qui est généralement le cas, de manière à obtenir des rapports molaires entre les groupements NCO et OH compris entre 0,3 à 10 et plus préférentiellement entre 0,8 et 1,5, on observe une instabilité des mélanges des deux dispersions.

A titre d'exemple, cette instabilité se traduit par une séparation macroscopique rapide, en quelques minutes généralement, pour donner d'une part une phase fluide et d'autre part une phase très visqueuse.

Il s'ensuit non seulement une impossibilité à conserver (stocker) ces mélanges, mais aussi une difficulté extrême à appliquer ce mélange sur la surface que l'on désire recouvrir ou imprégner selon les techniques usuelles d'application des peintures et des vernis. Si on fait en sorte d'appliquer ces mélanges instables sur un support, tel que sur une plaque de verre ou métallique, le film résultant n'est pas transparent mais apparaît opaque et hétérogène et donc ne convient pas.

Ces problèmes sont particulièrement aigus dans le cas d'isocyanates, masqués ou non, lorsqu'ils sont mélangés à des polyols non solubles, dispersés dans l'eau.

En outre dans le cas des revêtements destinés à l'extérieur, le revêtement doit être résistant aux intempéries et notamment à des variations de température importantes qui peuvent être de l'ordre 30 à 50°C, voire même 80°C [par exemple entre -20 et + 60°C].

C'est pourquoi un des buts de la présente invention est de fournir une composition qui permette de réaliser des revêtements ou des peintures extérieurs de qualité qui résiste bien aux intempéries.

Un autre but de l'invention est de fournir une composition qui permette de réaliser des revêtements de sols

industriels tels que décrits précédemment (résine d'imprégnation, enduits auto-lissants, chapes de résines ...) permettant notamment de :

- diminuer la porosité du support à l'eau, tout en laissant passer la vapeur ;
- d'accroitre la résistance au poussiérage et a la facilité de nettoyage ;
- d'augmenter la résistance aux agressions chimiques (acides, solvants,...) ;
- d'améliorer les propriétés mécaniques du support et de renforcer sa résistance à l'abrasion.

Un autre but de la présente invention est de fournir une du type précédent qui ne nécessite que peu ou pas de solvant.

Un autre but de la présente invention est de fournir une composition, notamment de vernis, susceptiple de protéger les betons architectoniques

Un autre but de la présente invention est de fournir une composition du type précédent qui est rapidement (au plus deux heures,) hors poussières.

Ces buts et d'autres qui apparaîtront par la suite sont atteints au moyen d'une composition utile notamment pour les revêtements extérieurs, comportant pour addition successive ou simultanée :

⇒ une phase aqueuse comportant une solution ou dispersion de polyol(s) dont la température de transition vitreuse ($t_g$) est au plus égale à 100°C, avantageusement à 50°C ;
⇒ une sous-composition isocyanate déjà ou à mettre en émulsion dans la même phase aqueuse ;

caractérisée par le fait que ledit polyol est sous la forme d'un mélange de latex où un ou plusieurs latex A, de teneur en fonction alcool accessible d'au moins 1% en masse associé à un, ou plusieurs latex B, dont la température de transition vitreuse ($t_g$) est au plus égale à l'ambiante et dont la teneur en fonction OH accessible est inférieure à 1%, le rapport massique entre les latex A et B pouvant varier entre 90/10 et 10/90 (intervalle fermé).

Avantageusement le polyol constitué d'un ou plusieurs latex (rappelons qu'un latex est une population de particules de même composition dispersées dans une phase continue ; dans la présente description, lorsque il y a plusieurs populations [une population par composition] dans une même phase continue, on considérera qu'il y a plusieurs latex) présente une température de transition vitreuse ($t_g$) comprise entre - 50°C et + 40°C ; en cas de mélange cette contrainte s'applique à au moins un des latex, de préférence à tous. Elle est surtout importante en cas d'utilisation d'un seul latex, dans ce cas la limite supérieure étant de préférence plus basse.

Dans le cas d'utilisation de latex de haute Tg, on obtient des revêtements rigides de grande dureté, particulièrement adaptés pour les sols industriels.

Pour une meilleure souplesse (notamment allongement à la rupture) et une meilleure résistance aux intempéries (variation rapide de la température extérieure en particulier au cours d'un seul nycthémère [cycle jour-nuit]), il est souhaitable que le polyol, ou au moins l'un des polyols lorsqu'il y en a plusieurs, présente une $t_g$ inférieure à 0°C, avantageusement à -10°C, de préférence à -20°C, voir -30°C dans les pays très rigoureux ;

Pour une bonne adhesion au support une tg (en cas de mélange de latex d'au moins un des latex) au plus égale à la température d'application (de la composition précurseur du revêtement sur le support).est conseillée.

Pour réaliser des films de peintures ou de vernis, on utilise un mélange de deux dispersions dans une (même) phase continue. Ces dispersions forment deux populations de particules ; l'une, l'émulsion contenant l'isocyanate qui peut être bloqué, et l'autre, une dispersion de polyol. Ce mélange peut être réalisé par mélange d'une suspension et d'une dispersion, mais plus généralement par dispersion d'un second constituant dans la phase continue d'un premier. Le plus souvent on émulsionne l'isocyanate dans la phase aqueuse de la dispersion des polyols.

Il est souhaitable que les dispersions de polyol(s) utilisées en association avec ces émulsions aient des tailles moyennes mesurées par diffusion quasi élastique de la lumière au moins égale à environ 10 nm, avantageusement à environ 20 nm, de préférence à environ 50 nm et au plus égale à environ 200 nanomètres, avantageusement à 150 nanomètres et de préférence au plus 100 nm.

L'obtention de polyol et notamment de latex polyol à température de transition vitreuse variable (haute ou basse) peut être réalisée en jouant sur le taux de co-monomère(s) donnant des homopolymères rigides et le taux de ceux donnant des homopolymères souples. Ainsi le remplacement de méthacrylate de méthyle par de l'acrylate de butyle permet d'abaisser significativement la température de transition vitreuse et à atteindre les valeurs ci dessus.

Avantageusement, le polyol peut comporter des groupements ioniques carboxyliques ou sulfoniques, mais il peut aussi ne pas comporter de groupement ionique.

Dans le cadre de la présente invention, il a été montré que la présence de fonction carboxylate anionique ($-CO_2^-$) augmentait significativement la cinétique de séchage ce qui est particulièrement intéressant pour obtenir un "hors poussière" rapide, notamment lorsque l'on opère à l'extérieur. Un effet significatif peut être noté pour un rapport d'au moins d'une fonction carboxylique pour environ 20 fonctions à hydrogène réactif [fonction alcool ou phénol], avantageusement pour un rapport d'un pour environ 10, de préférence pour un rapport d'un pour environ 5 ; il est toutefois souhaitable que ce rapport soit (pour le cas de plusieurs polyol, en moyenne et/ou pour le polyol le plus riche en fonction alcool) au plus égale à une fonction pour une fonction, de préférence d'un fonction carboxylique pour deux fonctions ol. Les contre cations des carboxylates répondent avantageusement au mêmes préférences que celles exprimées pour les contres cation du composé selon la présente invention.

Le polyol peut déjà être en milieu aqueux ou hydrosoluble ou hydrodispersable.

Il peut s'agir d'une solution aqueuse (qui peut notamment être obtenue après neutralisation des groupements ioniques) ou d'une émulsion du polymère dans l'eau ou d'une dispersion de type latex.

***De manière générale on entend par Polyol tout polymère minéral ou de préférence organique, présentant des fonctions OH.***

Toutefois les polyols préférés pour l'invention sont des latex tel que décrit ci-après.

Il semble possible de disperser un polyisocyanate standard dans un polyol hydrosoluble dans certaines conditions de formulation (notamment avec un rapport pigment sur liant de la peinture adapté). Mais l'utilisation de polyisocyanates standards avec des polyols hydrodispersés (types émulsion de résine ou latex), pose souvent des problèmes d'incompatibilité (floculation, apparition de plusieurs phases...). Un des nombreux avantages de la préparation selon l'invention est qu'elle offre une grande liberté de choix pour la formulation (forme physique du polyol, rapport pigment sur liant, facilité d'incorporation dans les milieux aqueux).

D'autre part il a été constaté au travers des valeurs d'usages des revêtements (notamment résistance chimique et dureté) que la réticulation des films était beaucoup plus importante quand le polyol utilisé était carboxylé.

En particulier on peut utiliser avantageusement les latex, notamment les nanolatex (c'est-à-dire latex dont la taille particulaire est nanométrique [plus précisément dont le $d_{50}$ est au plus égal à environ 100 nanomètres])

Ainsi, selon une des mises en oeuvre particulièrement avantageuses de la présente invention, le polyol est avantageusement un latex de taille nanométrique présentant les caractéristiques suivantes :

- ⇨ $d_{50}$ (ou plus souvent diamètre moyen) compris entre 15 et 60 nm, avantageusement entre 20 et 40 nm
- ⇨ taux de solide (en polyol, c'est-à-dire hors isocyanate, charge [Par exemple pigment] et adjuvant) : entre 10 et 50, avantageusement entre 25 et 40 %
- ⇨ un $d_{80}$ inférieur à 1 micromètre.

en ce qui concerne les valeurs suivantes, elles visent le cas de l'utilisation d'un polyol seul, sinon il s'agit de valeurs moyennes :

- ⇨ fonction carboxylate de 0,5 à 5 % en masse ($COO^- = 44$)
- ⇨ fonction ol : au moins 1, avantageusement au moins 1,5, de préférence au moins 2 % et au plus 6 %, avantageusement au plus 4 %, de préférence au plus 3 % (en masse OH = 17).

En outre, les latex, surtout quand leur point de transition vitreuse est inférieur à 0°C, avantageusement à -10°C, de préférence à -20°C, permettent l'obtention même avec des isocyanates aromatiques de bonne qualité de résistance aux intempéries et notamment aux variations de température, particulièrement adaptées pour des revêtements extérieurs ou des revêtements déposés sur des supports présentant déjà des fissures ou bien susceptibles de fissurer.

Il peut être particulièrement intéressant d'ajuster la souplesse des revêtements en jouant sur la Tg du latex.

Aussi un latex de haute Tg, peut permettre d'obtenir des revêtements rigides présentant des propriétés mécaniques améliorées...

Ainsi selon la présente invention, l'on utilise un mélange de dispersion de polyols (mélange de latex). comportant au moins deux polyols (deux latex) ou des classes de polyols associées deux à deux..

L'on peut ainsi associer à un latex (ou à plusieurs latex) A présentant une teneur (en pour-cent masse) en fonction OH accessible au moins égale à 1 % (env. 0,3 miliéquivalent par gramme), avantageusement à 1,5 %, de préférence à 2 %, un latex (ou plusieurs latex) B pauvre en fonction alcool (inférieure à 1%, avantageusement à 0,8 %, de préférence à 0,5%).

L'on peut associer un latex de tg supérieure à l'ambiante (environ 20°C) à un latex (qui peut avantageusement être le, l'un des, ou les latex B ci dessus) de tg inférieure à l'ambiante, avantageusement à 10°C de préférence à 0°C, plus préférentiellement dont la tg est comprise entre -10°C et -40°C.

l'on peut également mélanger des latex de granulométries différentes pour améliorer le coefficient de remplissage.

Ces latex peuvent être utilisés simultanément ou successivement. Ainsi l'on peut avantageusement constituer une précouche de latex de type B avant d'utiliser la composition formée de latex A et d'isocyanate émulsionné selon

l'invention.

Le rapport entre les latex peut varier entre 90/10 et 10/90, mais il est préférable que la teneur moyenne en fonction OH (masse = 17) soit au moins égale à une valeur comprise entre 1 et 5, avantageusement entre 1,5 et 4, de préférence entre 2 et 3 %.

On considère comme accessibles les fonctions carboxyliques qui sont au plus à 5 nanomètres de la surface, et les fonctions hydroxyles (alcooliques) qui sont au plus à 10 nanomètres de la surface [interface particule-phase continue (le plus souvent aqueuse) pour les latex].

Le rapport molaire entre les fonctions isocyanates libres et les fonctions hydroxyle est compris entre 0,5 et 2,5, avantageusement entre 0,8 et 1,6, avantageusement entre 1 et 1,4.

Les latex (non fonctionnalisés en isocyanate éventuellement masqués) décrits dans la demande de brevet d'invention français déposé le 28 avril 1995 N° 95/05123 et dans la demande réflexe de brevet Européen EP 0.739.961 donnent de forts bons résultats pour une meilleur compréhension de ce passage on pourra se reporte à ce texte.

Ainsi avantageusement les particules de latex présentent en moyenne une teneur en fonction acide (avantageusement carboxylique), accessible comprise entre 0,2 et 1,5, avantageusement entre 0,2 et 1,2 milliéquivalent/gramme de matière solide et qu'elles présentent en moyenne une teneur en fonction alcoolique primaire accessible comprise entre 0,3 et 2 milliéquivalent/gramme, avantageusement entre 0,3 et 1,5.

Ainsi, comme indiqué dans ce document sont préférés les latex constitués de particules porteuses de fonction (s) selon l'invention, sont hydrophobes et possèdent avantageusement une taille ($d_{90}$) généralement comprise entre 0,01 micromètre et 10 micromètres et de préférence au plus égale à 5 micromètres, voire à 2 micromètres. Elles sont calibrées, monodispers(é)es et présentes dans le latex à raison d'une quantité variant entre 0,2 à 65 % en poids du poids total du latex.

La masse moléculaire moyenne en poids ($M_w$ déterminée de préférence par chromatographie de perméation de gel, connue sous l'acronyme anglo-saxon de "GPC") des polymères constitutifs des particules des latex est avantageusement comprise entre $5.10^4$ et $5.10^6$, de supérieur à 1,1 $10^5$ et au plus égal à $2.10^6$..

Les fonctions alcooliques ou les fonctions acides, de préférence carboxyliques peuvent être également obtenues par hydrolyse de fonctions alcoologènes (ester, éther, halogénure...) ou de fonctions acidogènes (ester, anhydride, chlorure d'acide, amide, nitrile...).

La répartition entre les différents types de motifs répond avantageusement aux règles suivantes :

La teneur en motif issu du monomère constitué par ledit alcool libre présentant une fonction éthylénique activée, et rapportée à la totalité des motifs de toute sorte, est avantageusement comprise entre 3 et 15 %, de préférence entre 4 et 10 % (mole, ou équivalent).

Selon un mode avantageux de la présente invention, le motif est issu d'un ester, d'un acide alpha éthylénique, avec un diol dont une des fonctions alcool reste non estérifiée. Ledit diol est avantageusement un diol oméga/oméga prime, avantageusement choisi parmi le butanediol-1,4, le propane diol-1,3 et le glycol.

Il est souhaitable que ledit acide alpha éthylénique soit un acide acrylique éventuellement substitué.

Selon un mode préféré de la présente invention, la teneur en motif issue d'un acide carboxylique libre (ou sous forme d'un de ses sels), et rapportée à la totalité des motifs de toute sorte, est comprise entre 2 et 10 % (mole).

Pour des raisons économiques, il est souvent avantageux que ledit acide libre soit un acide acrylique éventuellement monosubstitué ou un de ses sels.

Les particules issues de la présente invention peuvent être constituées de deux polymères distincts, le premier constituant le coeur et le second constituant la périphérie. Ce type de particule peut être obtenu par épipolymérisation [où une semence de latex est recouverte par polymérisation superficielle (épipolymérisation, parfois désignée par surpolymérisation)] d'un polymère distinct. Le coeur est parfois appelé germe par analogie au phénomène de cristallisation. Dans ce cas là, seul le deuxième polymère, c'est-à-dire le polymère superficiel, répond aux contraintes de concentration aux différentes fonctions selon la présente invention.

Le rapport massique entre les isocyanates à mettre en suspension et ledit composés comportant une fonction anionique et avantageusement un fragment de chaîne polyéthylène glycol est le plus souvent au plus égal à 1/3 avantageusement au plus égal à environ 20%, de préférence à environ 10 %. (dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement).

Le rapport massique entre les isocyanates à mettre en suspension et ledit composé comportant une fonction anionique et avantageusement un fragment de chaîne polyéthylène glycol est avantageusement supérieur à 1 %, de préférence à 2 %.

Il est également souhaitable que la quantité dudit ou desdits composés comportant une fonction anionique et avantageusement un fragment de chaîne polyéthylène glycol corresponde à une valeur comprise entre $10^{-2}$ et 1, avantageusement entre 5.10-2 et 0,5 atome de E (cf. formule 1)par litre

Ainsi le rapport massique entre les isocyanates à mettre en suspension et ledit composé comportant une fonction anionique et avantageusement un fragment de chaîne polyéthylène glycol est avantageusement au moins

égal à 2 %, de préférence à 4 %, et au plus égal à environ 20 %, de préférence à environ 10 %, ainsi ce rapport massique est avantageusement compris entre 2 et environ 20 %, de préférence entre 4 et environ 10 %.

Selon une mise en oeuvre particulièrement avantageuse de la présente invention, après mise en dispersion ou émulsion, la somme des constituants du liant (c'est-à-dire des teneurs en masse du, ou des, isocyanates, des émulsifiants et des polyols), dans l'eau est au plus égale à 80 %, avantageusement à 70 %, de préférence à 60 % et est au moins égale à 10 %, avantageusement à 20 %, de préférence à 30 %. Ainsi la teneur en sec varie pour la zone préférée de 30 à 70 % par rapport à la totalité de la composition du liant.

Les émulsions d'isocyanate peuvent être faites de diverses manières et avec divers agent tensioactif on peut notamment utiliser d'une part les tensioactifs qui sont décrits dans la demande de brevet publiée EP 691.993 déposée au nom de la Demanderesse sous priorité française N° 93/03795 et N° 93/03796 et d'autre part la technique qui y est décrite. Soit bien sûr les deux ensembles.

Selon un mode préféré de la présente invention on utilise des compositions autoémulsifiante (c'est-à-dire qu'elle forme une émulsion sous une agitation modérée par exemple agitation de l'exemple 1) par exemple telle que décrite dans la demande N°96/02710 du 29 février 1996 et dans la demande PCT revendiquant sa priorité.

Ainsi comme mentionné dans la demande ci dessus, on peut utiliser des émulsions préparée à partir de composition à base d'isocyanate(s), avantageusement non masqué(s), comportant au moins un composé comportant une fonction anionique et avantageusement un fragment de chaîne polyéthylène glycol d'au moins 1, de préférence d'au moins 5 unités éthylènyloxyles

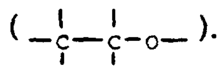

Ainsi la présente invention vise pour addition successive ou simultanée, une composition comportant notamment :

→ une sous composition vecteur de fonctions isocyanate dont les caractéristiques préférées seront précisée ultérieurement et

→ un agent tensioactif contenant au moins un composé comportant une fonction anionique et avantageusement un fragment de chaîne polyéthylène glycol d'au moins 1, de préférence d'au moins 5 unités éthylènyloxyles

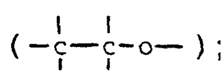

→ optionnellement une phase aqueuse.

Selon la présente invention, ledit composé peut-être utilisé seul, ou en mélange avec un ou plusieurs agents tensioactifs. Ces derniers peuvent être des agents répondant aussi à l'obligation ci-dessus de comporter une fonction anionique et avantageusement un fragment de chaîne polyéthylène glycol de préférence d'au moins 5 unités éthylènyloxyles.

Ces éventuels agents tensioactifs peuvent également être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl--phosphonate, phosphinate, sulfonate, sel d'acide gras et/ou zwitterionique] et parmi les composés non-ioniques ceux bloqués en bout de chaîne ou non. (toutefois les composés non ioniques présentant des fonctions alcooliques sur au moins l'une des chaînes semblent avoir un effet légèrement défavorable sur l'(auto)émulsion même si ils ont un effet favorable sur d'autres aspects de la composition pour peinture ; compte tenu de cela il est préférable que la teneur en ce type de composé représentent au plus un tiers, avantageusement au plus un cinquième, de préférence au plus un dixième en masse desdits composés anioniques selon l'invention)

Avantageusement ledit composé comporte une partie hydrophile formée de ladite fonction anionique, dudit (éventuel) fragment de chaîne polyéthylène glycol et d'une partie lipophile à base d'un radical hydrocarboné.

Ladite partie lipophile est en général choisie parmi les groupes alcoyles [dans la présente description ALCO*yle* est pris dans son sens étymologique de reste hydrocarboné d'un ALCO-*ol* après ignorance de la fonction alcool (ou ol)] ; et aryles. Lorsque le nombre de fonction éthylène glycol est au plus égale à 5, les alcoyles simples sont avantageusement ramifiés, avantageusement de $C_8$ à $C_{12.}$ les aralcoyles $C_{12}$ à $C_{16}$, les alcoylaryles de $C_{10}$ à $C_{14}$ et les aryles simples sont des $C_{10}$ à $C_{16}$ Sinon la partie lipophile peut varier largement surtout lorsque le nombre de motifs éthylène glycol est au dessus de 10, elle peut ainsi constitué un radical hydrocarboné d'au moins 1, avantageusement

d'au moins 3 et comportant au plus 25 avantageusement au plus 20 atomes de carbone.

Avantageusement ledit composé répond à la formule I suivante.

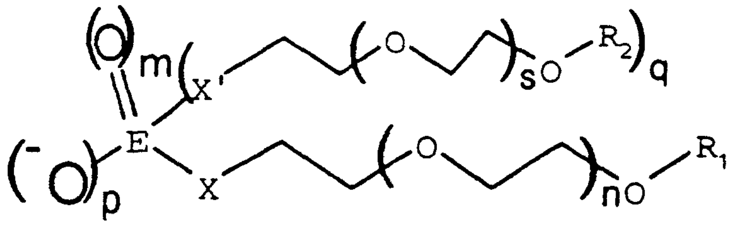

Où q représente zéro ou 1 ;

où p représente un entier entre 1 et 2 (intervalles fermés c'est à dire comprenant les bornes) ;

où m représente zéro ou un entier entre 1 et 2 (intervalles fermés c'est à dire comprenant les bornes) ;

où X et X', semblables ou différents, représente un bras comportant au plus deux chaînons carbonés ;

où s est zéro ou un entier choisi entre 1 et 30 avantageusement entre 5 et 25, de préférence entre 9 et 20 (intervalles fermés c'est à dire comprenant les bornes) ;

où n est zéro ou un entier choisi entre 1 et 30 avantageusement entre 5 et 25, de préférence entre 9 et 20 (intervalles fermés c'est à dire comprenant les bornes) ;

où E est un élément choisi parmi le carbone et les éléments métalloïdes des rangs atomique au moins égal à celui du phosphore et appartenant à la colonne VB ou aux chalcogènes de rang atomique au moins égal à celui du soufre ;

où $R_1$ et $R_2$, semblables ou différents, représentent un radical hydrocarboné, avantageusement choisi parmi les aryles et les alcoyles éventuellement substitués.

Quoique cela ne fasse pas partie des composés préférés, Il convient de noter que s et/ou n peuvent être égaux à zéro, avec la condition que E est phosphore et que lorsque s et n sont égaux à zéro, respectivement R1 et/ou R2 sont alcoyles de $C_8$ à $C_{12}$, avantageusement ramifié, ou un aralcoyle de $C_{12}$ à $C_{16}$ ou un alcoyle aryle de $C_{10}$ à $C_{14}$.

L'un des radicaux divalents X et X' peut aussi être un radical de type ($[EO_m (O^-)_p]$) de manière à former des pyroacides comme les diesters symétrique ou non de l'acide pyrophosphorique .

Le nombre total de carbone des composés anioniques visés par la présente invention est avantageusement d'au plus environ 100, de préférence au plus environ 50.

Les radicaux divalent X et éventuellement X' sont avantageusement choisis parmi les radicaux divalents constitués par (la partie gauche de la formule étant lié au premier E) :

- ⇨ quand E est P, un des X ou X' peut être O-P(O)($O^-$)-X"- ;
- ⇨ quand E est P, un des X ou X' peut être -O-($R_{10}$-O)P(O)-X"- ; ($R_{10}$ étant défini ci après)(X" représentant un oxygène ou une simple liaison) ;

- → une liaison directe entre E et le premier éthylène dudit fragment de chaîne polyéthylène glycol ;
- → les méthylènes éventuellement substitués et dans ce cas avantageusement fonctionnalisés en parti ;
- → les bras de structure -Y- et de structure -D-Y-, -Y-D-, -Y-D-Y'

où Y représente un chalcogène (avantageusement choisi parmi les plus légers à savoir le soufre et surtout l'oxygène), les éléments métalloïdes des rangs atomique au plus égal à celui du phosphore et appartenant à la colonne VB sous la forme de dérivés d'amines ou de phosphines tertiaires (le radical assurant le caractère tertiaire étant avantageusement d'au plus 4 carbones, de préférence d'au plus 2 carbones) ;

où D représente un alcoylène éventuellement substitué, y compris fonctionnalisé, D étant avantageusement éthylène ou méthylène, de préférence éthylène dans les structures -D-Y- et surtout -Y-D-Y', et méthylène dans les structures -Y-D-,

Ainsi E représente un atome choisi parmi les atomes de carbone (avantageusement dans ce cas m =1 et p = 1, le prototype de ce type de composé est un acide alcool [Par exemple acide lactique ou glycolique] polyéthoxylé) les atomes donnant les pnictures (éléments de la colonne VB)(avantageusement dans ce cas m = 1 ou 0 et p = 1 ou 2), les atomes de chalcogène de rang supérieur à l'oxygène (avantageusement dans ce cas m =1 ou 2 et p = 1 et q =0).

Ainsi dans le cas où E est chalcogène la formule I se simplifie avantageusement en

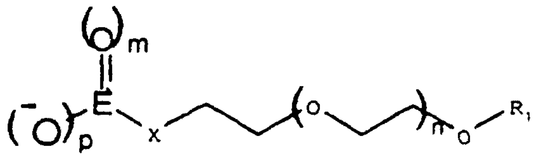

Avantageusement E représente le carbone et surtout le phosphore ou le soufre, de préférence le phosphore : dans ce dernier cas la formule (I) devient la formule (II) :

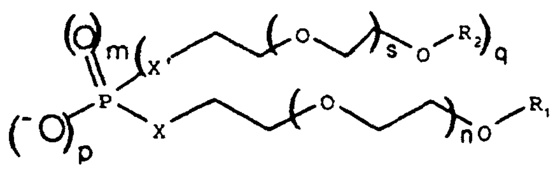

Avec lorsque q est zéro :

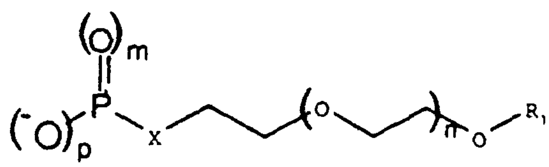

- Où p représente zéro ou un entier entre 1 et 2 (intervalles fermés c'est à dire comprenant les bornes) ;
- où m représente zéro ou un entier entre 1 et 2 (intervalles fermés c'est à dire comprenant les bornes) ;
- où la somme p + m + q est au plus égale à trois ;
- où la somme 1 + p + 2m + q est égale à trois ou à cinq ;
- où X et X', semblables ou différents, représentent un bras comportant au plus deux chaînons carbonés ;
- où n et s, semblables ou différents, représentent un entier choisi entre 5 et 30 avantageusement entre 5 et 25, de préférence entre 9 et 20 (intervalles fermés c'est à dire comprenant les bornes) ; où $R_1$ et $R_2$, semblables ou différents, représentent un radical hydrocarboné, avantageusement choisi parmi les aryles et les alcoyles éventuellement substitués notamment par atome d'halogène notamment fluor.

La classification périodique des éléments utilisée dans la présente demande est celle du supplément au Bulletin de la Société Chimique de France, janvier 1966, n° 1.

La fonctionnalisation éventuelle des alcoylènes et notamment méthylènes (X et X') est faite par des fonctions hydrophiles (amines tertiaires et autres fonctions anioniques y compris celles qui sont décrites ci-dessus [$EO_m$ $(O^-)_p$]).

Le contre-cation est avantageusement monovalents et est choisi parmi les cations minéraux et les cations organiques avantageusement non nucléophile et par voie de conséquence de nature quaternaire ou tertiaire (notamment oniums de colonne V tel que phosphonium, ammoniums, voire de colonne VI tel que sulfonium,.....) et leurs mélanges, le plus souvent ammoniums, en général issus d'une amine, avantageusement tertiaire. Avantageusement, on évite que 'le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes

Le pKa des cations (organique [ammonium.....] ou minéraux) est avantageusement compris entre 8 et 12.

Les cations et notamment les amines correspondant aux ammoniums ne présentent avantageusement pas de propriété tensioactive mais Il est souhaitable qu'elles présentent une bonne solubilité en tout cas suffisante pour assurer celle desdits composés comportant une fonction anionique et avantageusement un fragment de chaîne polyéthylène glycol, en phase aqueuse et ce à la concentration d'emploi. Les amines tertiaires présentant au plus 12

atomes, avantageusement au plus 10 atomes, de préférence au plus 8 atomes de carbone par fonction "onium" (rappelons qu'il est préféré qu'il n'y en ait qu'une par molécule) sont préférées. Les aminés peuvent comporter d'autre fonction et notamment les fonctions correspondant aux fonctions des acides aminés et des fonctions éther cyclique comme la N-méthylmorpholine, ou non. Ces autres fonctions sont avantageusement sous une forme qui ne réagisse pas avec les fonctions isocyanates et ne altèrent significativement pas la solubilité en phase aqueuse.

Il est très souhaitable que les composés anioniques selon la présente invention soient sous une forme neutralisée telle que le pH qu'elle induit lors d'une dissolution ou d'une mise en contact dans l'eau soit compris au moins égal à 3, avantageusement à 4, de préférence à 5 et au plus égal à 12, avantageusement à 11, de préférence à 10.

Lorsque E est phosphore il est souhaitable d'utiliser des mélanges de monoester et de diester dans un rapport molaire compris entre 1/10 et 10, avantageusement entre 1/4 et 4. De tel mélange peuvent en outre comporter de 1 % jusqu'à environ 20 % (il est toutefois préférable que cela ne dépasse pas environ 10 %) en masse d'acide phosphorique (qui sera avantageusement salifié au moins en partie de manière à être dans les zones de pH préconisée). Et de 0 à 5 % d'esters de l'acide pyrophosphorique.

Le rapport massique entre les composés tensioactifs (y compris ledit composé comportant une fonction anionique et avantageusement un fragment de chaîne polyéthylène glycol) et les isocyanates est très préférablement compris entre 4 et environ 10 %. Les zones préconisées seront explicitée ultérieurement.

La composition peut comporter en outre un catalyseur avantageusement latent (libérable par action des agents extérieurs, par exemple rayonnement visible ou U.V., oxygène).

La composition d'isocyanate selon l'invention peut comporter après mise en dispersion ou émulsion dans une phase aqueuse, une teneur en eau de 10 à 70%. L'émulsion est une émulsion huile dans eau.

Toutefois, au cours de l'étude qui a mené à la présente invention, en particulier dans le cas des isocyanates aliphatiques (c'est-à-dire reliés au squelette hydrocarboné (c'est-à-dire contenant à la fois de l'hydrogène et du carbone) par l'intermédiaire d'un carbone saturé ($sp^3$) Il a été montré qu'il avait un risque d'emballement de diverses réactions lorsque certaines proportions d'eau était atteinte, Aussi est-il avisé d'éviter des compositions où le rapport massique entre d'une part la quantité d'eau dans la phase aqueuse et d'autre part la somme de l'isocyanate et du tensioactif selon l'invention, est compris entre $10^{-2}$ et un demi. Si l'on désire plus de sûreté on évitera les rapports compris entre $10^{-3}$ et 1.

Les émulsions obtenues présentent pour la partie isocyanate des $d_{50}$ au moins égal à 0,1 micromètre, plus souvent à 0,5 micromètre et elles présentent un $d_{50}$, préférentiellement un $d_{80}$, avantageusement ≤ (au plus égal à) 5 micromètres, de préférence à 3 micromètres.

Le choix des isocyanates est un compromis entre le prix et les performances techniques. Les plus économiques sont les aromatiques (c'est-à-dire dont la fonction isocyanate est reliée à un carbone $sp^2$) et il faut convenir que les résultats obtenu avec ce type composé en utilisant la présente invention sont satisfaisant lorsqu'il sont comparés avec l'état antérieur de la technique pour les aromatiques. Toutefois ainsi que cela est exposé ci après les meilleurs résultat sont obtenus avec les aliphatiques et notamment ceux préconisés par la présente invention (en particulier pour recouvrir les céramiques notamment pour extérieur : tel que briques, tuiles etc.).

Il est préféré d'utiliser des isocyanates présentant une fonctionnalité moyenne comprise entre 2,5 et 4 et dont la viscosité est basse (au plus 1500 mPa.s. de préférence au plus 1000).

Selon une mise en oeuvre particulièrement avantageuse de la présente invention, après mise en dispersion ou émulsion, la somme des constituants du liant (c'est-à-dire des teneurs en masse du, ou des, isocyanates, des émulsifiants et des polyols), dans l'eau varie de 10, avantageusement de 30 à 70 % par rapport à la totalité de la composition.

Les isocyanates visés par l'invention comporte notamment les composés détaillés ci après.

Ces composés peuvent avantageusement contenir les structures courantes dans ce domaine par exemple les prépolymères issus de la condensation de polyol (Par exemple triméthylol propane) en général triol (avantageusement primaire voire plus loin sur la définition des polyols) et surtout les plus courantes, à savoir celles de type isocyanurate, encore appelée trimère, des structures urétidine dione, encore appelée dimère, des structures biuret ou allophanate ou une combinaison de ce type de structures sur une seule molécule ou en mélange.

Si l'on désire abaisser fortement la teneur en solvant de la composition, notamment lorsqu'elle sous forme d'émulsion, il est préférable d'utiliser des mélanges de ce type naturellement (c'est-à-dire sans adjonction de solvant) à basse-viscosité. Les composés présentant cette propriété sont surtout les dérivés (type isocyanurate, encore appelée trimère, des structures urétidine dione, encore appelée dimère, des structures biuret ou allophanate ou une combinaison de ce type de structures sur une seule molécule ou en mélange) en partie et/ou en totalité des isocyanates aliphatiques dont les fonctions isocyanate sont reliées au squelette par l'intermédiaire de fragments éthylène (Par exemple des polyméthylènediisocyanates, notamment l'hexaméthylènediisocyanate et ceux des arylènedialcoylènediisocyanates dont la fonction isocyanate est distante des noyaux aromatique d'au moins deux carbones tels que ($OCN-[CH_2]_t-\Phi-[CH_2]_u-NCO$) avec t et u supérieur à 1). Ces composés ou mélanges ont avantageusement un viscosité au plus égale à environ 3000 centipoises (ou millipascal.seconde), de préférence à environ 1500 centipoises (ou millipascal. seconde).

Lorsque ces valeurs ne sont pas atteintes Il est alors souvent utile d'amener le mélange à ces valeurs de viscosité par l'adjonction d'une quantité minimale de solvant(s) approprié(s).Ainsi que déjà mentionné ci-dessus, les isocyanates concernés peuvent être des mono-, di- voire poly-isocyanates. Avantageusement, ces dérivés peuvent contenir des structures de type isocyanurate, encore appelée trimère, des structures urétidine dione, encore appelée dimère, des structures biuret ou allophanate ou une combinaison de ce type de structures sur une seule molécule ou en mélange.

Les isocyanates monomères peuvent être :

⇒ aliphatiques, y compris cycloaliphatiques et arylaliphatiques, tels que :

- comme aliphatique simples, les polyméthylènediisocyanates et notamment l'hexaméthylène diisocyanate ;
- comme aliphatique partiellement "néopentylique" partiellement cyclique (cycloaliphatique) l'isophorone diisocyanate (IPDI) ;
- comme aliphatique cyclique (cycloaliphatique) diisocyanate ceux dérivés du norbornane ;
- les arylènedialcoylènediisocyanates (tel que $OCN\text{-}CH_2\text{-}\Phi\text{-}CH_2\text{-}NCO$ dont une partie ne présente pas de différence essentielle d'avec les aliphatiques à savoir ceux dont la fonction isocyanate est distante des noyaux aromatique d'au moins deux carbones tels que $(OCN\text{-}[CH_2]_t\text{-}\Phi)\text{-}[CH_2]_u\text{-}NCO)$ avec t et u supérieur à 1 ;

⇒ ou encore aromatiques tels que le toluylène diisocyanate.

Les polyisocyanates préférés visés par la technique de l'invention sont ceux dans lesquels au moins une, avantageusement deux, de préférence trois des conditions ci après sont remplies :

- Au moins une, avantageusement au moins deux, des fonctions NCO sont reliées à un squelette hydrocarboné, par l'intermédiaire d'un carbone saturé ($sp^3$), de préférence avec au moins une, plus préférentiellement au moins deux des sous conditions ci- après.

  - Au moins un, avantageusement deux, desdits carbones saturés ($sp^3$) est porteur d'au moins un, avantageusement deux, hydrogène(s),(en d'autre terme il a été trouvé que l'on obtenait de meilleurs résultats lorsque le carbone porteur de la fonction isocyanate était porteur d'un hydrogène, de préférence de deux hydrogènes) ;

- au moins un, avantageusement deux, desdits carbones saturés ($sp^3$) sont eux-mêmes portés par un carbone, avantageusement aliphatique (c'est-à-dire d'hybridation $sp^3$), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;

  - Tous les carbones par l'intermédiaire desquels les fonctions isocyanates sont reliées au squelette hydrocarboné, sont des carbones saturés ($sp^3$), lesquels sont avantageusement en partie, de préférence en totalité, porteurs d'un hydrogène, de préférence de deux hydrogènes ; en outre il est avantageux que lesdits carbones saturés ($sp^3$) soient au moins en partie (avantageusement un tiers, de préférence deux tiers), préférablement en totalité, eux-mêmes portés par un carbone, avantageusement aliphatique (c'est-à-dire d'hybridation $sp^3$), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;

- Sont en particulier bien adaptés ceux qui présentent au moins en partie un squelette isocyanurique ou biuret (que ce squelette soit issu d'un seul ou de plusieurs monomères, voir ci-dessous) et plus précisément des structures de type isocyanurate, encore appelée trimère, des structures urétidinedione, encore appelée dimère, des structures biuret ou allophanate ou une combinaison de ce type de structures sur une seule molécule ou en mélange.

Lorsque les polyisocyanates sont relativement lourds c'est à dire qu'ils comportent au moins 4 fonctions isocyanates, les deux premières conditions deviennent :

- Au moins un tiers, avantageusement deux tiers, des fonctions NCO sont reliées à un squelette hydrocarboné, par l'intermédiaire d'un carbone saturé ($sp^3$) ;

  . Au moins un tiers, avantageusement deux tiers, desdits carbones saturés ($sp^3$) est porteur d'au moins un, avantageusement deux, hydrogène(s),(en d'autre terme il a été trouvé que l'on obtenait de meilleurs résultats lorsque le carbone porteur de la fonction isocyanate était porteur d'un hydrogène, de préférence de deux

hydrogènes. En outre il est avantageux que lesdits carbones saturés ($sp^3$) soient au moins en partie (avantageusement un tiers, de préférence deux tiers), préférablement en totalité, eux-mêmes portés par un carbone, avantageusement aliphatique (c'est-à-dire d'hybridation $sp^3$), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;

Les isocyanates notamment aliphatiques réagissent avec certains des composés anioniques visés .Il réagissent avec l'hydroxyle des fonctions acides non ou mal neutralisées. Ces composés sont également visés par la présente invention.

En particulier dans le cas des phosphates (m = 1) ils réagissent pour donner des composés du type :

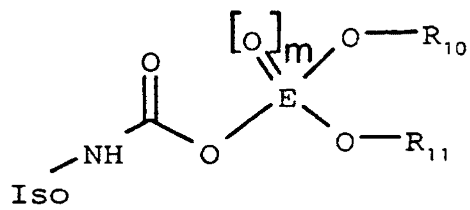

mais quand E appartient à la colonne du phosphore et que m (qui est le même que dans la formule I) est égale à zéro le composé s'isomérise (ou se fait directement) pour donner :

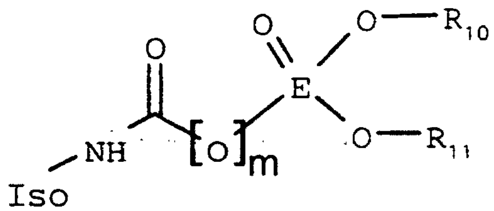

⇨ Où E est un élément de la colonne VA la classification périodique des éléments [(supplément au Bulletin de la Société Chimique de France Janvier 1966 N°1) avantageusement du phosphore]. Et donc notamment du type :

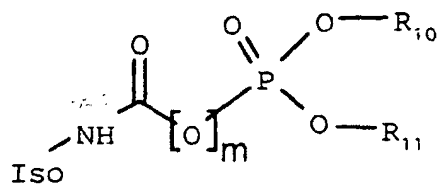

⇨ Où Iso est le reste (d'un poly)isocyanate (après élimination d'une fonction isocyanate)

⇨ où $R_{10}$ est un reste hydrocarboné (c'est-à-dire contenant des atomes d'hydrogène et de carbone) dont le point d'attache [c'est-à-dire l'atome porteur de la liaison ouverte] est un carbone

⇨ où $R_{11}$ est choisi parmi :

→ une charge négative ;

→ un groupe de formule II :

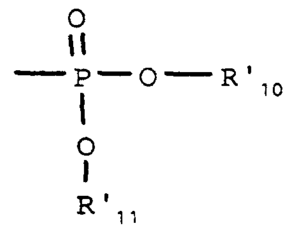

dans laquelle $R'_{10}$ est choisi parmi les restes hydrocarbonés (semblables ou différents de $R_{10}$) et une charge négative dont le point d'attache [c'est-à-dire l'atome porteur de la liaison ouverte] est un carbone

dans laquelle le(s) $R'_{11}$ est (sont) choisi(s) parmi les restes hydrocarbonés dont le point d'attache [c'est-à-dire l'atome porteur de la liaison ouverte] est un carbone (semblables ou différents de $R_{10}$ et de $R'_{11}$) et une charge négative.

Il est souhaitable qu'au moins un des substituants organiques ($R_{10}$ ; $R'_{11}$ ; $R'_{10}$) comporte un fragment de chaîne polyéthylène glycol avantageusement d'au moins 5, de préférence d'au moins 7 unités éthylènyloxyles. En d'autres termes il est souhaitable qu'au moins un des substituants organiques, réponde à la de même formule que les substituants de E dans la formule générale 1. Plus spécifiquement au moins un des substituants organiques ($R_{10}$ ; $R'_{11}$; $R'_{10}$) répond à la formule :

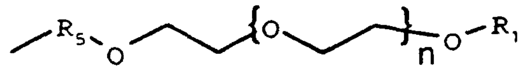

Où $R_5$ représente un bras comportant au plus deux chaînons carbonés (avec les mêmes valeurs préférées que X' et X)

où n est un entier choisi entre 0 et 30 avantageusement entre 5 et 25, de préférence entre 9 et 20 (intervalles fermés c'est à dire comprenant les bornes) ;

où $R_1$ représente un radical hydrocarboné, avantageusement choisi parmi les aryles et les alcoyles éventuellement substitués.

Ainsi selon une variante avantageuse de la présente invention, les compositions selon la présente invention présente des composés issus de la réaction exposées ci-dessus dans une proportion globale, par rapport à un volume d'un litre d'isocyanate, de 0,01 à 1, avantageusement de 0,05 à 0,5, de préférence de 0,05 à 0,3 équivalent de fonction :

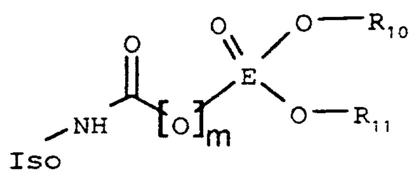

Il est avantageux que le radical Iso procure majoritairement ou en totalité un lien aliphatique avec les mêmes préférences que celles exposées ci dessus à propos des isocyanates.

Font donc également partie de l'invention les composés de formule :

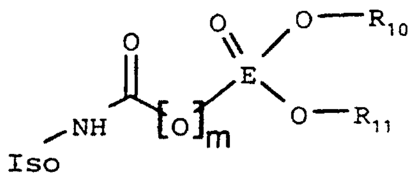

Dans laquelle R10 et R11 peuvent prendre les valeurs ci dessus mais aussi quand m est 1, être une charge négative en raison du fait que dans certain lot il peut y avoir des quantités significatives d'acide phosphorique résiduel.

Bien sur alors $R_{10}$ peut aussi valoir :

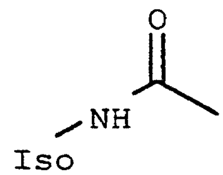

Le radical Iso pouvant ou non être alors le même que celui de l'avant dernière formule.

Dans laquelle Iso représente le reste d'un polyisocyanate, avantageusement d'un produit de réaction d'un monomère diisocyanate pour former du biuret ou des isocyanurates (trimère), ou avec un di- ou poly-ol avantageusement un triol ou un tetra-ol.

Il est avantageux que le radical Iso procure majoritairement ou en totalité un lien aliphatique avec les mêmes préférences que celles exposées ci dessus à propos des isocyanates.

Avantageusement Iso porte, outre la fonction figurée sur la formule au moins une, de préférence au moins deux fonctions isocyanates, dont, de préférence, au moins une n'est pas masquée, et dont, plus préférentiellement, au moins deux ne sont pas masquées.

Ce but et d'autres qui apparaîtront par la suite sont atteints au moyen d'un procédé de mise en émulsion qui comporte au moins l'étape suivante :

- ajout, avantageusement sous agitation très modérée, des ou de l'isocyanate dans le mélange polyol + eau.

L'agent tensioactif peut être soit dans la phase aqueuse, soit de préférence dans la phase isocyanate. Dans le premier cas les réactions entre isocyanate et ledit composé comportant une fonction anionique et avantageusement un fragment de chaîne polyéthylène glycol sont beaucoup moins importantes.

Cette agitation est de préférence manuelle ou mécanique.

Cette mise en émulsion est avantageusement menée à une température inférieure à 50°C, de préférence à l'ambiante.

Il est souhaitable de réaliser, si nécessaire, un ajustement du pH (pour atteindre une valeur avantageusement au moins égale à trois, de préférence à 4 et avantageusement au plus égal à 11 de préférence à 10 et donc avantageusement comprise entre 3 et 11, de préférence entre 4 et 10) lors de la mise en émulsion. Cet ajustement permet d'atteindre une zone avantageuse où la première (ou unique) acidité de chaque agent tensioactif selon la présente invention est neutralisée.

Selon une variante avantageuse de la présente invention, les pigments (notamment le bioxyde de titane) et des charges (notamment des charges de type silice, corindon, carbure de silicium, ..., permettant d'obtenir une amélioration de la résistance à l'abrasion et (ou) un caractère anti dérapant, sont dispersés dans le ou les polyols avant l'addition de l'isocyanate.

Un autre but de la présente invention est de fournir un procédé d'application de la composition à base d'isocyanate pour former un revêtement.

Ces buts et d'autres qui apparaîtront par la suite sont atteints au moyen d'un procédé comportant l'application d'une couche de préparation (c'est-à-dire de composition selon l'invention comportant la phase aqueuse et les constituants de la couche) dont l'épaisseur avant séchage variera entre 0,01 à 15 mm, suivant qu'il s'agit d'une résine d'imprégnation, d'une peinture, d'un revêtement auto lissant, ou d'une chape de résine. Dans le cas des peintures, l'épaisseur avant séchage est au mois égale à 10 μm (micromètre), avantageusement à 50 μm (micromètre), de préférence 100 μm (micromètre) et au plus égale à 1000 μm (micromètre), avantageusement à 400 micromètres, de préférence 200 micromètres, correspondant après séchage à une épaisseur comprise entre 20 et 80, voire 200 micromètres.

Selon une mise en oeuvre avantageuse, ce procédé comporte un séchage de 20°C à 60°C pendant une durée pouvant aller de 1/4 à 24 heures.

Avantageusement ce séchage a lieu en présence d'un solvant pour aider à l'élimination de l'eau.

Selon une mise en oeuvre particulièrement avantageuse de la présente invention, l'application est menée par pulvérisation.

La préparation des surfaces est bien connue de l'homme de métier (Par exemple phosphatations pour les composés ferreux acier ou chromatation pour les surfaces a base d'aluminium). (on peut par exemple se référer aux ouvrages suivants : "organic coating technology " volume II de H.F. PAYNE et "Paint Handbook" Edité par G.E.WEISMANTEL).

Pour le cas particulier des supports en bétons, pierre, on effectuera un traitement visant à éliminer les dépôts ou résidus susceptibles de diminuer l'adhérence (laitance, poussières, cires, produits de cure, salissures organiques)

par traitement mécanique (brossage, meulage, sablage, ...).

Selon la présente invention, il est ainsi possible d'obtenir des revêtements (notamment peintures ou vernis) présentant les caractéristiques techniques (ces valeurs dépendent surtout des polyols utilisés) suivantes :

| mise en oeuvre et caractéristiques du revêtement<br>épaisseur sèche Iso2178 : 45 µm<br>support et traitement de celui-ci :acier traité par phosphatation : plaques R46I<br>du fournisseur Q Pannel | | |
|---|---|---|
| | propriétés minimales obtenues | usuelle |
| test din 67530 (ces valeurs n'ont d'intérêt que lorsque l'on désire une peinture brillante mais non lorsque l'on veut de la peinture mat ou satinée)<br>Brillance 20°<br>60° | <br><br>0,5<br>0,5 | <br><br>80<br>90 |
| dureté König iso 1522 | 10s | 150s |
| Adhérence test din 53151 | GT-5 | GT-1 |
| Résistance au chocs test N°iso 6272<br>direct<br>inverse | 10 cm<br><br>5 cm | >100 cm<br><br>>100 cm |
| Résistance à la méthyléthylcétone (butanone) (Double passage) | 20 | >200 |
| Tenue en extérieur QUV<br>Din 53384 | 50 h | 800 h |

Le Rhodafac® RE610 est un mélange de mono- et de diesters phosphorique selon la formule II, la formule moyenne de son radical hydrocarboné est un nonylphénol polyéthoxylé (-dix fois). Le rapport molaire entre mono ester et diester est de environ 1 (arrondi mathématique).

**Exemple 1** - préparation du mélange 1

On mélange 165g de tolonate® HDT (oligomère isocyanurate à base de trimère) avec 24g d'acétate de butyle et 13g de Rhodafac® RE610 (mélange de mono- et de diesters phosphorique selon la formule II) et 3g de triéthylamine. Ce mélange est agité à l'aide d'une pale cadre ou défloculeuse pendant 5 minutes à 100 tours/minute. Ce mélange a une viscosité de 0,84 Pa.s. A 20°C et une coloration inférieure à 100 APHA.

**Exemple 2 préparation du mélange 2**

On mélange 79 g de tolonate® HDT (oligomère isocyanurate à base de trimère) avec 10g d'acétate de butyle et 9g de Rhodafac® RE610 (mélange de mono- et de diesters phosphorique selon la formule II) et 1,4 g de triéthylamine. Ce mélange est agité à l'aide d'une pale cadre ou défloculeuse pendant 5 minutes à 100 tours/minute.

**Exemple 3 -nanolatex 1**

Le nanolatex utilisé est un produit expérimental réalisé selon le procédé décrit dans la demande de brevet d'invention français déposé le 28 avril 1995 N° 95/05123 et dans la demande réflexe de brevet Européen N°EP 0.739.961 de caractéristiques suivantes :

diamètre moyen évalué par comptage photométrique (microscopie électronique par transmission à haute résolution) : entre 25 et 30 nm
fonction carboxylate : 2,5 % en poids sur le polymère sec
fonction ol : 2,5 % en poids sur le polymère sec
Masse moléculaire supérieure à 100 000
Extrait sec en poids : 29 %
pH environ 8

Température Minimum de Formation de Film environ 20° à 25 °C
Température de transition vitreuse environ 40°C (entre 40°C et 50°C)

**Exemple 4** - Préparation d'un revêtement à partir du mélange 1 et du Nanolatex 1

Le vernis est préparé par incorporation avec mélange manuel de 4, 6 g du mélange 1 dans 45,6 g de nanolatex. Ce ratio correspond à un rapport des fonctions NCO/OH de 1,2.

Le mélange ainsi préparé présente une durée de vie de 4 heures, ceci signifie que pendant 4 heures la viscosité et l'aspect du mélange est inchangé mais aussi que les films formés à partir de ce mélange pendant ces 4 heures ont des propriétés comme la résistance au solvant, la dureté et la brillance inchangés.

Le temps de séchage du film est remarquablement court : 20 minutes pour le temps "hors poussière" et 30 minutes pour le temps "sec au toucher" selon la norme NF T 30037. Ces mesures ont été faites sur plaques de verre pour une épaisseur sèche de film de 40 µm et un séchage à 23°C avec 55% d'humidité relative.

Le fait d'obtenir un temps de séchage court et un durée de vie du mélange relativement long constitue un avantage très recherché par les experts en peinture.

Les valeurs d'usage du revêtement sont également globalement d'un très bon niveau, on peut citer:

- la dureté Persoz du film de 50 µm sec mesurée sur plaque d'acier après séchage de 24 heures à 23°C et 55 % d'humidité relative est égale à 275 secondes.
- La brillance sous un angle de 20° du film appliqué sur plaque d'acier est égale à 90
- la résistance à la Méthyl Ethyl Cétone du film séché pendant 7 jours à 23°C et 55 % d'humidité relative est supérieure à 200 aller-retour avec un coton imbibé.
- la résistance aux acides(sulfurique 20 %, nitrique 10 %, chlorhydrique 10 %,) est très bonne.
- la résistance aux alcools (éthanol) et aux hydrocarbures (gazole) est également bonne
- la résistance aux base moyenne (ammoniaque 20 %) est satisfaisante

Ces excellentes performances de cette association Nanolatex-polyisocyanate selon l'invention sont certainement imputables à la physico-chimie très particulière de ces produits notamment à la très importante surface spécifique du nanolatex qui favorise une grande homogénéité de réticulation dans le polymère final.

**Exemple 5 application sur support béton**

Le mélange préparé dans l'exemple 4 est appliqué à la brosse avec un dépôt de 200 g/m2 sur un support de type béton.

Après séchage de 1h à température ambiante, le revêtement offre une hydrofugation du support qui se traduit par un effet perlant, et une moindre absorption d'eau. De plus le revêtement présente une bonne résistance à l'abrasion.

**Exempte 6 -nanolatex 2**

Le nanolatex est un produit expérimental décrit dans la demande de brevet d'invention français déposé le 28 avril 1995 N° 95/05123 et dans la demande réflexe de brevet Européen N°EP 0.739.961 de caractéristique suivante :

$d_{50}$ environ 35 nm
fonction carboxylate : 1 % en poids sur le polymère sec
fonction ol : 2,6 % en poids sur le polymère sec
Masse moléculaire supérieure à 100 000
Extrait sec en poids : 30 %
pH environ 8
Température de transition vitreuse environ - 30°C

**Exemple 7 -Préparation d'un revêtement à partir du mélange 1 et du nanolatex 2.**

Le vernis est préparé par incorporation avec mélange manuel de 4, 6 g du mélange 1 dans 45,6 g de nanolatex. Ce ratio correspond à un rapport des fonctions NCO/OH de 1,2.

Le revêtement est appliqué sur béton à la brosse à raison de 2 couches de 300 g/m2. Sa grande souplesse, générée principalement par le faible Tg du nanolatex, lui confère une capacité à masquer les fissures pouvant apparaître lors du vieillissement du support (notamment à cause de la dilatation du béton à cause de grande variation de température).

De plus la réticulation avec le polyisocyanate selon l'invention confère au revêtement une excellente résistance aux agents chimiques et à l'eau.

L'allongement à la rupture du film obtenu est 4 fois plus important (40 % contre 10 %) que dans le cas du latex 1 [cf. exemple N° 4].

En outre le revêtement présente une bonne voire excellente résistance cycle gel dégel à savoir:

⇒ deux heures à 60°C avec rayonnement UV et humidité relative inférieure à 50 % ;
⇒ deux heures à -20°C ;
⇒ deux heures à 20°C avec eau liquide sur toute la surface revêtue;
⇒ deux heures à -20°C ;
⇒ deux heures à 60°C avec rayonnement UV et humidité relative inférieure à 50 % ;
⇒ deux heures à 23°C avec humidité relative supérieure à 95 %.

le comportement est aussi bon lors de la soumission au cycle NF : XPP18420

**Exemple 8 -nanolatex 3**

Le nanolatex est un produit expérimental décrit dans la demande de brevet d'invention français déposé le 28 avril 1995 N° 95/05123 et dans la demande réflexe de brevet Européen N°EP 0.739.961 de caractéristiques suivantes :

diamètre moyen évalué par comptage photométrique (microscopie électronique par transmission à haute résolution) : entre 25 et 40 nm
fonction carboxylate : 2,5 % en poids sur le polymère sec
fonction ol : 0,4 % en poids sur le polymère sec
Masse moléculaire supérieure à 100 000
Extrait sec en poids : 30 %
pH environ 8
Température Minimum de Formation de Film environ 0°C
Température de transition vitreuse environ 16°C

**Exemple N°9 mélange de nanolatex**

On mélange 75 gramme de nanolatex 1 (décrit dans l'exemple 3) avec 25 gramme de nanolatex 3 (décrit dans l'exemple 8), sous agitation modérée (agitateur tripale) pendant 5 mn.

**Exempte N°10 mélange de nanolatex**

On mélange 50 gramme de nanolatex 1 (décrit dans l'exemple 3) avec 50 gramme de nanolatex 3 (décrit dans l'exemple 8), sous agitation modérée (agitateur tripale) pendant 5 mn.

**Exemple N°11 Préparation et application d'un revêtement à partir du mélange 2 et du nanolatex 1**

La résine est préparée par incorporation de 13 g du mélange 2 dans 100 g du nanolatex 1 sous agitation modérée (agitateur tripale) pendant 10 mn. Le ratio 13 g pour 100 g correspond à un rapport des fonctions NCO/OH de 1,2.

Le mélange ainsi préparé présente une durée de vie en pot d'au moins 4 heures.

Le revêtement est appliqué sur support Fibrociment à l'aide d'un pistolet pneumatique à raison d'environ 200 g/$m^2$.

**Exemple 12 : Préparation et application d'un revêtement à partir du mélange 2 et du mélange de nanolatex de l'exemple 9**

La résine est préparée par incorporation de 9,75 g du mélange 2 dans 100 g du mélange de nanolatex de l'exemple 13 sous agitation modérée (agitateur tripale) pendant 10 mn.

Le mélange ainsi préparé présente une durée de vie en pot d'au moins 4 heures.

Le revêtement est appliqué sur support Fibrociment à l'aide d'un pistolet pneumatique à raison d'environ 200 g/$m^2$.

**Exemple 13 : Préparation et application d'un revêtement à partir du mélange 2 et du mélange de nanolatex de l'exemple 10**

La résine est préparée par incorporation de 6,5 g du mélange 2 dans 100 g du mélange de nanolatex de l'exemple 14 sous agitation modérée (agitateur tripale) pendant 10 mn.

Le mélange ainsi préparé présente une durée de vie en pot d'au moins 4 heures.

Le revêtement est appliqué sur support Fibrociment à l'aide d'un pistolet pneumatique à raison d'environ 200 g/$m^2$.

**Comparaison des résultats: Adhérence du revêtement sur le support Fibrociment (support à pores fermées)**

L'adhérence du revêtement sur le support Fibrociment a été caractérisé par un essai de quadrillage conformément à la norme ISO 2409.
Deux tests ont été réalisés sur chaque revêtement :

- adhérence après conditionnement à l'air 7 jours à température ambiante,
- adhérence après conditionnement à l'air 7 jours à température ambiante puis immersion 7 jours dans l'eau à température ambiante.

Les résultats sont reportés dans le tableau suivant :

| | exemple 11 comparatif | exemple 12 | exemple 13 |
|---|---|---|---|
| polyol à forte teneur en fonction alcool et $t_g$~40°C | 100% | ~75 % | ~50 % |
| polyol à faible teneur en fonction alcool et $t_g$~15°C | 0 % | ~25 % | ~50 % |
| Adhérence à sec | Gt- 3 | Gt- 1 | Gt-1 |
| Adhérence après immersion<br>*Commentaires* | Gt- 5<br>*le revêtement est arraché* dès *la réalisation des incisions* | Gt- 2 | Gt-4-5<br>*arrachage de large bande lors du décollement rapide du ruban adhésif* |

Les revêtements sont tous bons à sec.
Toutefois ceux contenant un mélange bimodal de polyols (deux niveaux de teneur en fonctions ol) sont meilleurs en adhérence à sec.
En adhérence à l'humide, le composé à base d'un seul latex est particulièrement médiocre, pour les autres on observe un optimum en fonction du taux de latex faiblement hydroxylé.
les propriétés mécaniques ne sont pas affectées par le trempage et présente une bonne réversibilité par séchage.

## Revendications

**1.** Composition utile notamment pour les revêtements extérieurs, comportant pour addition successive ou simultanée :

⇒ une phase aqueuse comportant une solution ou dispersion de polyol(s) dont la température de transition vitreuse ($t_g$) est au plus égale à 100°C, avantageusement à 50°C ;
⇒ une sous-composition isocyanate déjà ou à mettre en émulsion dans la même phase aqueuse ;

**caractérisée par le fait que** ledit polyol est sous la forme d'un mélange de latex où un ou plusieurs latex A, de teneur en fonction alcool accessible d'au moins 1 % en masse associé à un, ou plusieurs latex B, dont la température de transition vitreuse ($t_g$) est au plus égale à l'ambiante et dont la teneur en fonction OH accessible est inférieure à 1%, le rapport massique entre les latex A et B pouvant varier entre 90/10 et 10/90 (intervalle fermé).

**2.** Composition selon la revendication 1, **caractérisée par le fait que** l'un au moins des latex présente une température de transition vitreuse ($t_g$) au plus égale à 0°C, avantageusement à -10°C, de préférence à -20°C.

3. Composition selon les revendications 1 et 2, **caractérisée par le fait que** la teneur massique moyenne en fonction OH est comprise entre 1 et 5%.

4. Composition selon les revendications 1 à 3, **caractérisée par le fait que** l'un desdits latex présente une $t_g$ supérieure à 20°C.

5. Composition selon les revendications 1 à 4, **caractérisée par le fait que** l'un desdits latex présente une $t_g$ comprise entre -10 et - 40°C.

6. Composition selon les revendications 1 à 4, **caractérisée par le fait que** l'un desdits latex B présente une $t_g$ comprise entre -10 et - 40°C.

7. Composition selon les revendications 1 à 6, **caractérisée par le fait que** le pourcentage (en masse) en ledit latex à faible teneur en hydroxyle est compris entre (intervalle fermé) 10 et 50%, de préference entre 10 et 40%.

8. Composition selon les revendications 1 à 7, **caractérisée par le fait que** ledit polyol formé d'au moins deux latex dont l'un au moins présente une température de transition vitreuse ($t_g$) au moins égale à 20°C, avantageusement à -10°C, de préférence à -20°C, voire à -30°C, le pourcentage (en masse) en ledit latex à faible $t_g$ étant compris entre (intervalle fermé) 10 et 90% et avantageusement entre 10 et 50%, de préférence entre 10 et 40%.

9. Composition selon les revendications 1 à 7, **caractérisée par le fait que** ladite sous-composition isocyanate déjà, ou à mettre, en émulsion dans la même phase aqueuse est une composition autoémulsifiante.

10. Utilisation de la composition selon les revendications 1 à 9, **caractérisée par le fait que** pour la formation d'un revêtement sur support de porosité variable.

11. Utilisation selon la revendication 10, **caractérisée par le fait que** ledit support est choisi parmi les surfaces non métalliques, les enduits de façade, les mortiers et les plâtres et les matériaux dits phosphomagnésiens.

12. Utilisation selon la revendication 11, **caractérisée par le fait que** ledit support est à porosité fermée.

13. Utilisation selon la revendication 12, **caractérisée par le fait que** ledit support est d'inclinaison variable.

14. Procédé de préparation d'un revêtement selon la revendication 13, **caractérisé par le fait qu'**il comporte l'application d'une couche d'une composition selon les revendications 1 à 9, comprise entre 20 et 200 micromètres (mesurée sur sec).

15. Procédé selon la revendication 14, **caractérisé par le fait qu'**il comporte un séchage de 10°C à 50°C pendant 1/4 et 3 heures.

16. Procédé selon les revendications 14 et 15, **caractérisé par le fait qu'**il comporte un séchage en présence d'un solvant pour aider à l'élimination de l'eau.

17. Procédé selon les revendications 14 à 16, **caractérisé par le fait que** la couche est appliquée par pulvérisation ou au moyen d'une brosse.

18. Revêtement susceptible d'être obtenu par un procédé selon les revendications 14 à 17.

## Claims

1. Composition which is useful in particular for exterior coatings, comprising for successive or simultaneous addition:

   ⇒ an aqueous phase comprising a solution or dispersion of polyol(s) whose glass transition temperature ($t_g$) is at most equal to 100°C, advantageously equal to 50°C;
   ⇒ an isocyanate sub-composition already emulsified or to be emulsified in the same aqueous phase;

   **characterized in that** the said polyol is in the form of a latex mixture where one or more latexes A, having a content

of accessible alcohol functional group of at least 1% by mass, combined with one or more latexes B, whose glass transition temperature (tg) is at most equal to room temperature and whose content of accessible OH functional group is less than 1%, it being possible for the mass ratio between the latexes A and B to vary between 90/10 and 10/90 (closed interval).

**2.** Composition according to Claim 1, **characterized in that** at least one of the latexes has a glass transition temperature ($t_g$) at most equal to 0°C, advantageously equal to -10°C, preferably equal to -20°C.

**3.** Composition according to Claims 1 and 2, **characterized in that** the average content by mass of OH functional group is between 1 and 5%.

**4.** Composition according to Claims 1 to 3, **characterized in that** one of the said latexes has a $t_g$ greater than 20°C.

**5.** Composition according to Claims 1 to 4, **characterized in that** one of the said latexes has a $t_g$ of between -10 and -40°C.

**6.** Composition according to Claims 1 to 4, **characterized in that** one of the said latexes B has a $t_g$ of between -10 and -40°C.

**7.** Composition according to Claims 1 to 6, **characterized in that** the percentage (by mass) of the said latex with a low hydroxyl content is between (closed interval) 10 and 50%, preferably between 10 and 40%.

**8.** Composition according to Claims 1 to 7, **characterized in that** the said polyol consisting of at least two latexes of which at least one has a glass transition temperature ($t_g$) at least equal to 20°C, advantageously to -10°C, preferably to -20°C, or even to -30°C, the percentage (by mass) of the said latex with low $t_g$ being between (closed interval) 10 and 90% and advantageously between 10 and 50%, preferably between 10 and 40%.

**9.** Composition according to Claims 1 to 7, **characterized in that** the said isocyanate sub-composition already emulsified or to be emulsified in the same aqueous phase is a self-emulsifying composition.

**10.** Use of the composition according to Claims 1 to 9, **characterized in that** for the formation of a coating on a support of variable porosity [lacuna].

**11.** Use according to Claim 10, **characterized in that** the said support is chosen from non-metallic surfaces, façade coverings, mortars and plasters and so-called phosphomagnesium materials.

**12.** Use according to Claim 11, **characterized in that** the said support has a closed porosity.

**13.** Use according to Claim 12, **characterized in that** the said support is of variable inclination.

**14.** Process for preparing a coating according to Claim 13, **characterized in that** it comprises the application of a coat of a composition according to Claims 1 to 9, of between 20 and 200 micrometres (measured when dry).

**15.** Process according to Claim 14, **characterized in that** it comprises drying from 10°C to 50°C for 1/4 to 3 hours.

**16.** Process according to Claims 14 and 15, **characterized in that** it comprises drying in the presence of a solvent to assist the removal of the water.

**17.** Process according to Claims 14 to 16, **characterized in that** the coat is applied by spraying or by means of a brush.

**18.** Coating which can be obtained by a process according to Claims 14 to 17.

**Patentansprüche**

**1.** Zusammensetzung, insbesondere für äußere Beschichtungen, umfassend für eine aufeinanderfolgende oder gleichzeitige Zugabe:

→ eine wäßrige Phase, umfassend eine Lösung oder Dispersion von Polyol(en), deren Glasübergangstemperatur ($t_g$) höchstens gleich 100 °C, vorteilhafterweise 50 °C beträgt,

→ eine Isocyanat-Unterzusammensetzung, die bereits in der gleichen wäßrigen Phase vorliegt oder in dieser emulgiert wird; **dadurch gekennzeichnet, daß** das genannte Polyol in Form einer Mischung von Latices vorliegt, worin ein oder mehrere Latex A mit einem Gehalt an zugänglicher Alkoholfunktion von mindestens 1 Masse-% mit einem oder mehreren Latex B assoziiert sind, deren Glasübergangstemperatur ($t_g$) höchstens gleich der Umgebungstemperatur beträgt und deren Gehalt an zugänglicher Alkoholfunktion unter 1 % liegt, wobei das Masseverhältnis zwischen den Latex A und B zwischen 90/10 und 10/90 (geschlossener Intervall) variieren kann.

**2.** Zusammensetzung nach Anspruch 1, **dadurch gekennzeichnet, daß** mindestens einer der Latices eine Glasübergangstemperatur ($t_g$) von höchstens gleich 0 °C, vorteilhafterweise -10 °C, vorzugsweise -20 °C aufweist.

**3.** Zusammensetzung nach Anspruch 1 und 2, **dadurch gekennzeichnet, daß** der mittlere Massegehalt an Funktionen OH zwischen 1 und 5 % beträgt.

**4.** Zusammensetzung nach Anspruch 1 bis 3, **dadurch gekennzeichnet, daß** einer der genannten Latices eine Glasübergangstemperatur ($t_g$) von über 20 °C aufweist.

**5.** Zusammensetzung nach Anspruch 1 bis 4, **dadurch gekennzeichnet, daß** einer der genannten Latices eine Glasübergangstemperatur ($t_g$) zwischen -10 °C und -40 °C aufweist.

**6.** Zusammensetzung nach Anspruch 1 bis 4, **dadurch gekennzeichnet, daß** einer der genannten Latices B eine Glasübergangstemperatur ($t_g$) zwischen -10°C und -40°C aufweist.

**7.** Zusammensetzung nach Anspruch 1 bis 6, **dadurch gekennzeichnet, daß** der Prozentsatz (in Masse) an dem genannten Latex mit einem niedrigen Gehalt an Hydroxyl zwischen (geschlossener Intervall) 10 % und 50 %, vorzugsweise zwischen 10 % und 40 % beträgt.

**8.** Zusammensetzung nach Anspruch 1 bis 7, **dadurch gekennzeichnet, daß** das genannte Polyol gebildet wird von mindestens zwei Latices, von denen mindestens einer eine Glasübergangstemperatur (tg) von mindestens gleich 20 °C, vorteilhafterweise -10 °C , vorzugsweise -20 °C, sogar -30 °C aufweist, wobei der Prozentsatz (in Masse) an dem genannten Latex mit niedriger Glasübergangstemperatur ($t_g$) zwischen (geschlossener Intervall) 10 % und 90 % und vorteilhafterweise zwischen 10 % und 50 %, vorzugsweise zwischen 10 % und 40 % beträgt.

**9.** Zusammensetzung nach Anspruch 1 bis 7, **dadurch gekennzeichnet, daß** die genannte Isocyanat-Unterzusammensetzung, die bereits in der gleichen wäßrigen Phase vorliegt oder in dieser emulgiert wird, eine selbstemulgierende Zusammensetzung ist.

**10.** Verwendung der Zusammensetzung nach Anspruch 1 bis 9, **dadurch gekennzeichnet, daß** sie die Bildung einer Beschichtung auf einem Träger mit variabler Porosität betrifft.

**11.** Verwendung nach Anspruch 10, **dadurch gekennzeichnet, daß** der genannte Träger unter den nichtmetallischen Oberflächen, dem Fassadenputz, den Mörteln und den Gipsen und den sogenannten Phosphomagnesium-Materialien ausgewählt wird.

**12.** Verwendung nach Anspruch 11, **dadurch gekennzeichnet, daß** der genannte Träger eine geschlossene Porosität aufweist.

**13.** Verwendung nach Anspruch 12, **dadurch gekennzeichnet, daß** der genannte Träger eine variable Neigung aufweist.

**14.** Verfahren zur Herstellung einer Beschichtung nach Anspruch 13, **dadurch gekennzeichnet, daß** es das Aufbringen einer Schicht von einer Zusammensetzung nach Anspruch 1 bis 9 umfaßt, die zwischen 20 und 200 Mikrometer (trocken gemessen) beträgt.

**15.** Verfahren nach Anspruch 14, **dadurch gekennzeichnet, daß** es eine Trocknung von 10 °C bis 50 °C während

1/4 und 3 Stunden umfaßt.

16. Verfahren nach Anspruch 14 und 15 , **dadurch gekennzeichnet, daß** es eine Trocknung in Anwesenheit eines Lösungsmittels umfaßt, um die Entfernung des Wassers zu unterstützen.

17. Verfahren nach Anspruch 14 bis 16, **dadurch gekennzeichnet, daß** die Schicht durch Versprühen oder mit Hilfe einer Bürste aufgetragen wird.

18. Beschichtung, die geeignet ist, durch ein Verfahren nach Anspruch 14 bis 17 erhalten zu werden.